# EUROPÄISCHE PATENTSCHRIFT

(11) **EP 2 905 492 B1**
(45) Veröffentlichungstag und Bekanntmachung des Hinweises auf die Patenterteilung: **04.07.2018**
(21) Anmeldenummer: 14181498.8
(22) Anmeldetag: 20.08.2014
(51) Int. Cl.: F16D 21/06

(54) **Kupplungsanordnung und Herstellungsverfahren hierfür**
Coupling assembly and method for producing the same
Système de couplage et procédé de fabrication correspondant

(30) Priorität: 29.08.2013 DE 202013011739 U; 26.02.2014 DE 102014102516
(43) Veröffentlichungstag der Anmeldung: 12.08.2015
(73) Patentinhaber: GETRAG B.V. & Co. KG, 74199 Untergruppenbach (DE); Valeo Embrayages, 80009 Amiens Cedex 2 (FR)
(72) Erfinder: Bellinger, Gerhard, 69242 Muehlhausen (DE); Stark, Timo, 74229 Oedheim (DE); Gremplini, Hansi, 74379 Ingersheim (DE); Depoilly, Nicolas, 80480 Dury (FR); Dekydtspotter, Pascal, 80560 Puchevillers (FR); Arhab, Rabah, 95350 Saint-Brice-Sous-Forêt (FR)
(74) Vertreter: Witte, Weller & Partner Patentanwälte mbB

(56) Entgegenhaltungen:
- WO-A1-02/46632
- WO-A1-2011/023407
- DE-A1- 2 245 739
- DE-A1-102008 040 172
- DE-A1-102009 059 929
- DE-A1-102010 018 989
- DE-A1-102012 221 958
- JP-A- 2006 194 323

## Beschreibung

Die vorliegende Erfindung betrifft eine Kupplungsanordnung für einen Kraftfahrzeugantriebsstrang, mit einem Gehäuse, mit wenigstens einer Kupplung, mit einem ersten Drehglied, das als Wellen- oder Nabenglied ausgebildet ist und das in Bezug auf das Gehäuse drehbar gelagert ist, und mit einem zweiten Drehglied, das einen sich radial erstreckenden Radialabschnitt aufweist und das in Bezug auf das Gehäuse drehbar gelagert ist, wobei zwischen dem ersten Drehglied und dem Radialabschnitt des zweiten Drehgliedes ein Axiallager angeordnet ist, wobei das Axiallager in Bezug auf das erste Drehglied zentriert montiert ist, und wobei an dem ersten Drehglied benachbart zu dem Axiallager ein Axialsicherungsring montiert ist.

Ferner betrifft die vorliegende Erfindung ein Verfahren zum Herstellen einer solchen Kupplungsanordnung.

Solche Kupplungsanordnungen dienen in Kraftfahrzeugantriebssträngen regelmäßig dazu, einen Antriebsmotor wie einen Verbrennungsmotor mit einem Getriebe wie einem Stufengetriebe zu verbinden. Die darin enthaltene Kupplung dient beispielsweise zum Anfahren und/oder zum Unterbrechen des Leistungsflusses, sofern in dem Getriebe eine Gangstufe gewechselt werden soll.

Neben der bekannten manuellen Betätigung ist es im Stand der Technik auch bekannt, derartige Kupplungen automatisiert zu betätigen, wozu fluidische oder elektromechanische Aktuatoren verwendet werden können.

Die Kupplung kann als trockene Reibkupplung ausgebildet sein, kann jedoch insbesondere als nasslaufende Reibkupplung ausgebildet sein.

Bei nasslaufenden Reibkupplungen ist es bekannt, diese fluidisch zu betätigen, beispielsweise mittels eines ATF-Öls. Hierzu ist es ebenfalls bekannt, eine Drehdurchführung zwischen einem Gehäusezapfen und einem Nabenglied vorzusehen, wobei über die Drehdurchführung Fluid zum Kühlen und/oder zur Betätigung der Kupplung bereitgestellt wird.

Die bei der Betätigung einer solchen Reibkupplung auftretenden Axialkräfte werden in der Regel mittels geeigneter Axiallager abgestützt.

Hierbei kann vorgesehen sein, ein derartiges Axiallager vorab an dem Radialabschnitt des zweiten Drehgliedes zu montieren. Zu diesem Zweck kann es vorgesehen sein, in dem Radialabschnitt geeignete Aussparungen vorzusehen, in die das Axiallager zur Vormontage eingeclipst wird, was kostenaufwändig sein kann.

Die hierbei an die Herstellung des zweiten Drehgliedes und/oder des Axiallagers zu stellenden Anforderungen hinsichtlich der Herstellungstoleranzen von Ausnehmungen bzw. Vorsprüngen etc. können jedoch vergleichsweise hoch sein. Insbesondere soll hierdurch gewährleistet sein, dass sich das Axiallager nach der Vormontage nicht mehr löst, bevor die Endmontage erfolgt.
Aus der Offenlegungsschrift DE 10 2012 221 958 A1 ist eine Doppelkupplung bekannt, mit axial hintereinander angeordneten und hydraulisch betätigten Einzelkupplungen für ein Doppelkupplungsgetriebe in einem Antriebsstrang eines Fahrzeugs, wobei zwischen einem Rotor und einem Außenlamellenträger bzw. Nabenbauteil ein Axiallager angeordnet ist.
Aus der Offenlegungsschrift DE 10 2008 040 172 A1 ist eine Mehrfachkupplungseinrichtung bekannt, mit zwei Lammellenkupplungsanordnungen, wobei ein erster Außenlamellenträger einer ersten Lamellenkupplungsanordnung an einem ersten Ausgangselement angebunden ist oder dieses aufweist und ein zweiter Außenlamellenträger einer zweiten Lamellenkupplungsanordnung an einem zweiten Ausgangselement angebunden ist oder dieses aufweist, wobei eine Drehmomentübertragung von einer Eingangsseite über einen daran angebundenen Innenlamellenträger, wenigstens ein Lamellenpacket und den Außenlamellenträger der betreffenden Lamellenkupplungsanordnung zum ersten bzw. zweiten Ausgangselement verläuft. Eine weitere Doppelkupplungsanordnung ist aus WO 2011/023407 A1 bekannt.

Vor diesem Hintergrund ist es eine Aufgabe der Erfindung, eine verbesserte Kupplungsanordnung sowie ein verbessertes Herstellungsverfahren für eine Kupplungsanordnung anzugeben, wobei insbesondere einer der oben genannten Nachteile überwunden wird.

Diese Aufgabe wird bei der eingangs genannten Kupplungsanordnung dadurch gelöst, dass zwischen dem Axiallager und dem Axialsicherungsring eine Verdrehsicherung eingerichtet ist.

Ferner wird die obige Aufgabe gelöst durch ein Verfahren zum Herstellen einer Kupplungsanordnung, insbesondere einer Kupplungsanordnung der erfindungsgemäßen Art, mit den Schritten, ein Gehäuse bereitzustellen, ein erstes Drehglied in Form eines Wellen- oder Nabengliedes an dem Gehäuse zu montieren, ein Axiallager an dem Wellen- oder Nabenglied zu montieren, so, dass das Axiallager in Bezug auf das Wellen- oder Nabenglied zentriert ist und an einer sich radial erstreckenden Anlagefläche des Wellen-oder Nabengliedes anliegt; benachbart zu dem Axiallager einen Axialsicherungsring an dem Wellen-oder Nabenglied zu montieren; eine Verdrehsicherung zwischen dem Axiallager und dem Axialsicherungsring einzurichten; und ein zweites Drehglied an dem Gehäuse zu montieren, wobei das zweite Drehglied einen Radialabschnitt aufweist, der an dem Axiallager anliegt.

Bei dem erfindungsgemäßen Verfahren kann die Reihenfolge der Schritte des Montierens des ersten Drehgliedes an dem Gehäuse und des Montierens des Axiallagers an dem Wellen- oder Nabenglied auch vertauscht werden, derart, dass zunächst das Axiallager an dem ersten Drehglied montiert wird und anschließend das erste Drehglied an dem Gehäuse montiert wird.

Vorteilhaft ist bei der Erfindung insbesondere, dass sich erhebliche Verbesserungen hinsichtlich der Montage ergeben. Insbesondere aufgrund der Möglichkeit, dass sich die Toleranzanforderungen hinsichtlich der Fertigung des Axiallagers und/oder hinsichtlich der Fertigung des ersten Drehgliedes und/oder hinsichtlich der Fertigung des zweiten Drehgliedes verringern lassen, können sich erhebliche Kosteneinsparungseffekte ergeben. Ferner kann der Montageprozess insgesamt vereinfacht und verbessert werden.

Das Gehäuse der Kupplungsanordnung kann ein eigenes Gehäuse der Kupplungsanordnung sein, kann jedoch auch ein Teilgehäuse eines weiteren Bauteils eines Antriebsstranges sein, insbesondere ein Teil eines Getriebegehäuses oder dergleichen.

Unter einem Wellen- oder Nabenglied wird vorzugsweise ein Bauteil verstanden, dessen Längserstreckung größer ist als der Außendurchmesser.

Das zweite Drehglied ist vorzugsweise ein Blechteil, das sich nach der Art eines Antriebs- oder Abtriebskorbes von einer Welle radial nach außen erstreckt, und beispielsweise mit einem Lamellenträger der Kupplung verbunden sein kann.

Die Kupplungsanordnung kann eine Kupplung beinhalten, kann jedoch auch als Doppelkupplungsanordnung ausgebildet sein. Die Kupplung der erfindungsgemäßen Kupplungsanordnung ist für diesen Fall vorzugsweise die radial innere Kupplung bzw. jene Kupplung, deren Ausgangsglied axial benachbart ist zu dem ersten Drehglied.
An dem ersten Drehglied ist benachbart zu dem Axiallager ein Axialsicherungsring montiert, wobei zwischen dem Axiallager und dem Axialsicherungsring eine Verdrehsicherung eingerichtet ist.
Die Verdrehsicherung kann insbesondere zwischen dem Axialsicherungsring und der Zentriereinrichtung eingerichtet sein. Ferner ist es hierbei bevorzugt, wenn an dem Axialsicherungsring wenigstens eine Aussparung ausgebildet ist, in die ein Axialvorsprung des Axiallagers greift, insbesondere ein Axialvorsprung, der einstückig mit der ersten Scheibe ausgebildet ist. Besonders bevorzugt ist es, wenn der Axialvorsprung sich von wenigstens einer der Mehrzahl von sich axial erstreckenden Nasen der Zentriereinrichtung in axialer Richtung hin zu dem Axialsicherungsring erstreckt und in dessen Aussparung eingreift. Die Aussparung kann beispielsweise eine Radialaussparung oder eine Axialaussparung sein.

Die Aufgabe wird somit vollkommen gelöst.

Generell kann das Axiallager ein Gleitlager sein.

Von besonderem Vorzug ist es jedoch, wenn das Axiallager ein Wälzlager mit einer ersten Scheibe und einer zweiten Scheibe ist, zwischen denen eine Mehrzahl von Wälzkörpern angeordnet ist, wobei die erste Scheibe an dem ersten Drehglied axial anliegt und eine sich in axialer Richtung erstreckende Zentriereinrichtung aufweist, die mit einer Ringfläche des ersten Drehgliedes in Eingriff steht.

Die Zentrierung des Axiallagers erfolgt folglich über die erste Scheibe.

Die Wälzkörper können vorzugsweise an einem Käfig drehbar gelagert sein, der zwischen der ersten Scheibe und der zweiten Scheibe angeordnet ist.

Ferner ist es hierbei vorteilhaft, wenn die Zentriereinrichtung eine Mehrzahl von sich axial erstreckenden Nasen aufweist.

Über derartige Nasen kann die Zentrierung des Axiallagers in Bezug auf das erste Drehglied auf konstruktiv einfache Art und Weise erfolgen.

Dabei ist es ferner vorteilhaft, wenn die Nasen einstückig mit der ersten Scheibe ausgebildet sind.

Auf diese Weise lässt sich das Axiallager kostengünstig herstellen.

Die Ringfläche des ersten Drehgliedes, an der das Axiallager über die Zentriereinrichtung zentriert wird, kann eine Außenumfangsfläche des ersten Drehgliedes aufweisen.

In einer alternativen Ausführungsform weist diese Ringfläche eine Innenumfangsfläche des ersten Drehgliedes auf.

Die Umfangsfläche kann auch eine Umfangsfläche einer Axialausnehmung an einer Stirnseite des ersten Drehgliedes sein.

Insgesamt ist es ferner vorteilhaft, wenn die Kupplung ein Eingangsglied und ein Ausgangsglied aufweist, wobei das zweite Drehglied das Ausgangsglied der Kupplung ist.

Insbesondere bei einer Betätigung der Kupplung, vorzugsweise auf fluidische Art und Weise, können die hierbei auftretenden Axialkräfte zwischen dem Ausgangsglied und dem Wellen- oder Nabenglied auf einfache Weise aufgenommen werden.

Insgesamt ist es ferner vorteilhaft, wenn das erste Drehglied ein Nabenglied ist, das drehbar in Bezug auf einen Gehäusezapfen gelagert ist, wobei das Nabenglied drehfest mit einem Eingangsglied der Kupplung verbunden ist.

Das Nabenglied dreht sich hierbei mit dem Eingangsglied mit und dient vorzugsweise auch zur Radiallagerung der Kupplung.

Ferner ist es hierbei bevorzugt, wenn ein Kolben zur Betätigung der Kupplung drehfest mit dem Nabenglied verbunden ist.

Gemäß einer weiteren insgesamt bevorzugten Ausführungsform ist das erste Drehglied ein Nabenglied, das drehbar in Bezug auf einen Gehäusezapfen gelagert ist, wobei zwischen dem Nabenglied und dem Gehäusezapfen eine Drehdurchführung zum Zuführen von Fluid zu der Kupplung ausgebildet ist.

Hierdurch ist es möglich, der Kupplung Fluid zu deren Kühlung und/oder deren Betätigung zuzuführen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Ausführungsform einer erfindungsgemäßen Kupplungsanordnung;
- Fig. 2: eine schematische Längsschnittansicht einer weiteren erfindungsgemäßen Kupplungsanordnung, wobei ein Käfig eines Axiallagers gezeigt ist;
- Fig. 3: das Axiallager der Fig. 2, wobei ein Wälzkörper des Axiallagers gezeigt ist;
- Fig. 4: eine schematische Längsschnittansicht einer weiteren erfindungsgemäßen Kupplungsanordnung, wobei eine Verdrehsicherung zwischen einem Axiallager und einem Axialsicherungsring dargestellt ist; und
- Fig. 5: eine schematische perspektivische Ansicht der Verdrehsicherung der Fig. 4.

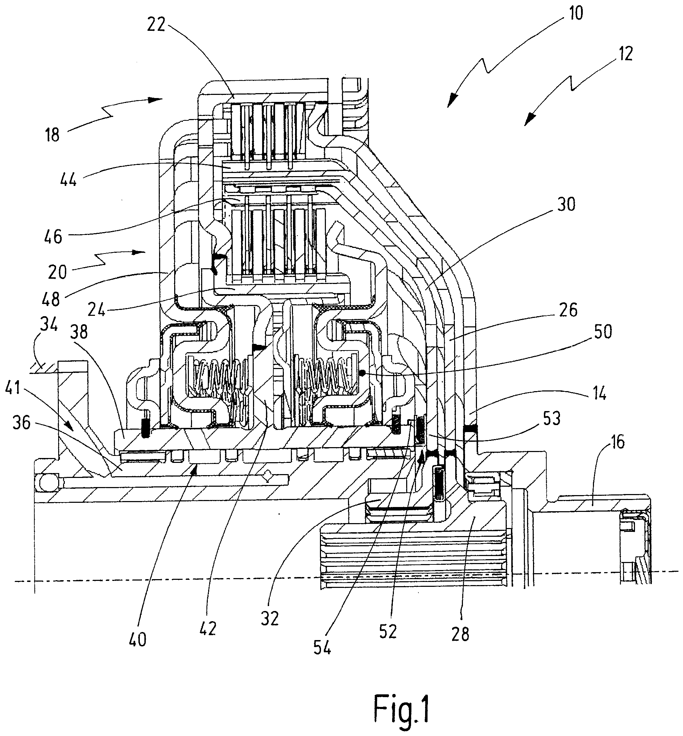

In Fig. 1 ist ein Teil eines Antriebsstranges für ein Kraftfahrzeug im Längsschnitt schematisch dargestellt und generell mit 10 bezeichnet.

Der Antriebsstrang 10 beinhaltet eine Kupplungsanordnung 12. Die Kupplungsanordnung 12 weist ein Eingangsglied 14 auf, das nach der Art eines Antriebskorbes ausgebildet und mit einer Eingangswelle 16 verbunden ist. Die Eingangswelle 16 kann beispielsweise mit einem Antriebsmotor verbunden sein, wie einem Verbrennungsmotor.

Die Kupplungsanordnung 12 beinhaltet eine erste Kupplung 18 und eine zweite Kupplung 20. Die Kupplungen 18, 20 sind als nasslaufende Lamellenkupplungen ausgebildet und radial ineinander verschachtelt. Die erste Kupplung 18 ist die radial außenliegende Kupplung, die zweite Kupplung 20 ist die radial innere Kupplung.

Das Eingangsglied 14 ist mit einem Außenlamellenträger 22 der ersten Kupplung 18 verbunden. Auf einem der Eingangswelle 16 gegenüberliegenden axialen Ende ist das Eingangsglied 14 ferner mit einem Innenlamellenträger 24 der zweiten Kupplung 20 verbunden.

Die erste Kupplung 20 weist ein erstes Ausgangsglied 26 auf, das als Abtriebskorb ausgebildet ist, der axial benachbart zu dem Eingangsglied 14 angeordnet ist. Das erste Ausgangsglied 26 ist mit einer ersten Ausgangswelle 28 verbunden, die beispielsweise mit einem ersten Teilgetriebe eines Doppelkupplungsgetriebes verbunden sein kann.

Die zweite Kupplung 20 weist ein zweites Ausgangsglied 30 auf, das ebenfalls als Abtriebskorb ausgebildet ist. Das zweite Ausgangsglied 30 ist mit einer zweiten Ausgangswelle 32 verbunden. Die zweite Ausgangswelle 32 kann als Hohlwelle koaxial zu der ersten Ausgangswelle 28 angeordnet und mit einem zweiten Teilgetriebe eines Doppelkupplungsgetriebes verbunden werden.

Das erste Ausgangsglied 26 ist in axialer Richtung zwischen dem Eingangsglied 14 und dem zweiten Ausgangsglied 30 angeordnet. Diese Körbe sind vorzugsweise als Blechteile ausgebildet, und vorzugsweise durch Stanzen und Biegen und/oder ähnliche Bearbeitungsverfahren hergestellt.

Die Kupplungsanordnung 12 weist ferner ein schematisch angedeutetes Gehäuse 34 auf. Das Gehäuse 34 ist mit einem Gehäusezapfen 36 verbunden, der sich von dem der Eingangswelle 16 gegenüberliegenden axialen Ende in die Kupplungen 18, 20 hinein erstreckt, derart, dass er radial innerhalb der Kupplungen 18, 20 angeordnet ist.

An dem Gehäusezapfen 36 ist ein Nabenglied 38 drehbar gelagert. Zwischen dem Nabenglied 38 und dem Gehäusezapfen 36 ist eine Drehdurchführung 40 eingerichtet, über die Fluid 41, beispielsweise Hydrauliköl, insbesondere ATF-Öl, den Kupplungen 18, 20 zugeführt werden kann. Es versteht sich, dass in dem Gehäusezapfen 36 geeignete Kanäle wenigstens zum Zuführen von Kühlfluid zu den Kupplungen 18, 20 vorgesehen sind, vorzugsweise jedoch, wie dargestellt, auch Kanäle zur hydraulischen Betätigung der Kupplungen 18, 20.

An einem Außenumfang des Nabengliedes 38 ist ein Radialsteg 42 vorgesehen, der in axialer Richtung etwa mittig in Bezug auf die Kupplungen 18, 20 ausgerichtet ist. Der Radialsteg 42 ist mit dem Eingangsglied 14 verbunden, genauer gesagt, mit jenem Teil des Eingangsgliedes, der sich auf dem der Eingangswelle 16 gegenüberliegenden Ende des Außenlamellenträgers 22 der ersten Kupplung 18 in radialer Richtung nach innen erstreckt. Über den Radialsteg 42 sind die Kupplungen 18, 20 folglich radial gelagert.

Die erste Kupplung 18 weist einen Innenlamellenträger 44 auf, der mit dem ersten Ausgangsglied 26 verbunden ist. Die zweite Kupplung 20 weist einen Außenlamellenträger 46 auf, der mit dem zweiten Ausgangsglied 30 verbunden ist.

Ein erster Kolben 48 ist an dem Nabenglied 38 axial verschieblich gelagert und dient zur Betätigung der ersten Kupplung 18. Ein zweiter Kolben 50 ist ebenfalls axial beweglich an dem Nabenglied 38 gelagert und dient zur Betätigung der zweiten Kupplung 20. Die Kolben 48, 50 sind auf axial gegenüberliegenden Seiten des Radialsteges 42 angeordnet. Nicht näher bezeichnete Federn drücken die Kolben 48, 50 in axialer Richtung in eine Ausgangsposition vor, bei der die Kupplungen 18, 20 jeweils geöffnet sind ("normally open"). Die Federn stützen sich dabei in axialer Richtung jeweils direkt bzw. indirekt an dem Radialsteg 42 ab. Zur Begrenzung des Axialweges der Kolben 48, 50 sind jeweils nicht näher bezeichnete Stützglieder vorgesehen, die axial in Bezug auf das Nabenglied 38 gesichert sind.

Das zweite Ausgangsglied 30 weist einen Radialabschnitt 53 auf, der axial benachbart ist zu einer Stirnseite des Nabengliedes 38. Zwischen dem Radialabschnitt 53 und der Stirnseite des Nabengliedes 38 ist ein Axiallager 52 angeordnet.

Das Axiallager 52 weist eine schematisch angedeutete Zentriereinrichtung 54 auf, mittels der das Axiallager 52 in Bezug auf das Nabenglied 38 zentriert montiert ist. Die zentrierte Montage des Axiallagers 52 an dem Nabenglied 38 kann im Wege einer Vormontage erfolgen, so dass das Nabenglied 38 gemeinsam mit dem daran vormontierten Axiallager 52 beim Zusammenbau der Kupplungsanordnung 12 montiert wird. Alternativ kann das Axiallager 52 an dem Nabenglied 38 montiert werden, bevor das zweite Ausgangsglied 30 montiert wird.

Durch die Maßnahme, das Axiallager in Bezug auf das Nabenglied 38 zentriert zu montieren, ist es nicht notwendig, dieses in Bezug auf das zweite Ausgangsglied 30 zentriert zu montieren. Folglich kann das zweite Ausgangsglied 30 mit geringeren Anforderungen an die Herstellungstoleranzen hergestellt werden. Gleiches gilt für die Herstellung des Axiallagers 52.

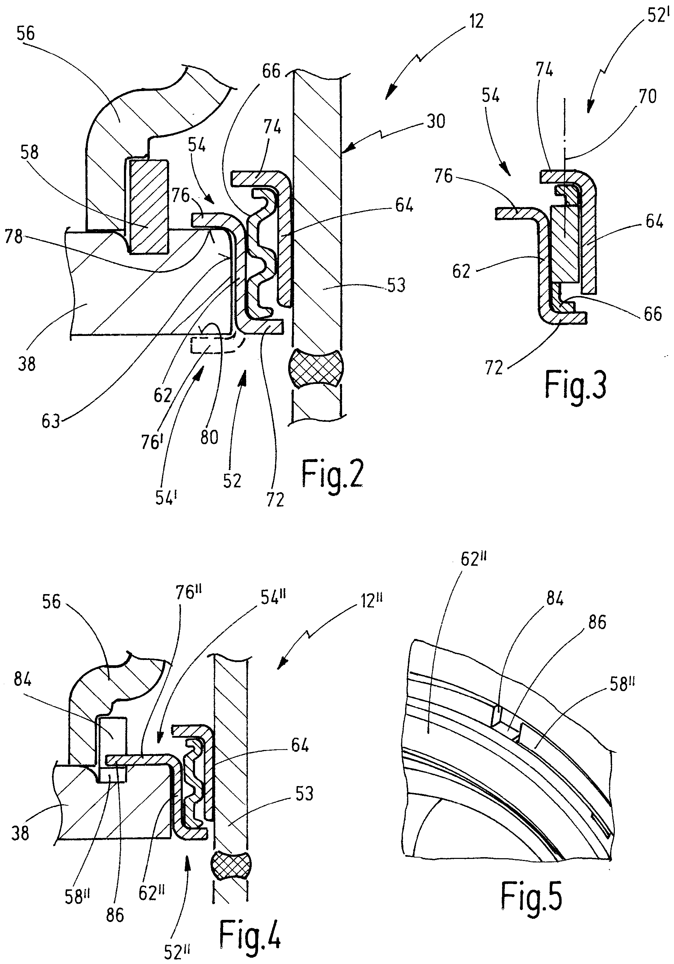

In den Fig. 2 und 3 ist in schematischer Form eine Ausführungsform eines derartigen Axiallagers 52 dargestellt.

Fig. 2 zeigt zunächst einen Teil eines Stützgliedes 56 zur Begrenzung der Axialbeweglichkeit des zweiten Kolbens 50, wobei das Stützglied 56 mittels einer Axialsicherung 58 axial an dem Nabenglied 38 gesichert ist.

Das Axiallager 52 weist eine erste Scheibe 62 auf, die als Ringscheibe ausgebildet ist und axial an einer Stirnfläche 63 des Nabengliedes 38 anliegt. Ferner weist das Axiallager 52 eine zweite Scheibe 64 auf, die an dem Radialabschnitt 53 des zweiten Ausgangsgliedes 30 anliegt. Das Axiallager 52 beinhaltet ferner einen Käfig 66, an dem eine Mehrzahl von Wälzkörpern 68 drehbar gelagert ist. Die Wälzkörper 68 sind vorzugsweise Rollen, die jeweils um Drehachsen 70 drehbar gelagert sind, die radial verlaufen.

Die erste Scheibe 62 weist einen Innensteg 72 auf, der einen Einbauraum für den Wälzkörper 68 radial nach innen begrenzt. Die zweite Scheibe 64 weist einen Außensteg 74 auf, der einen Einbauraum für den Wälzkörper 68 in radialer Richtung nach außen begrenzt.

Die erste Scheibe 62 weist eine Mehrzahl von über den Umfang verteilt angeordneten Nasen 76 auf, von denen in den Fig. 2 und 3 jeweils eine im Schnitt dargestellt ist. Die Nasen 76 erstrecken sich in axialer Richtung und übergreifen eine Ringfläche in Form einer Außenumfangsfläche 78 des Nabengliedes 38, wodurch das Axiallager 52 zentriert in Bezug auf das Nabenglied 38 montiert ist.

Fig. 2 zeigt in gestrichelter Form, dass die Nasen 76 auch so ausgebildet sein können, dass die Nasen 76' eine Ringfläche in Form einer Innenumfangsfläche 80 des Nabengliedes 38 übergreifen. Die Nasen 76 und die Nasen 76' können alternativ oder kumulativ vorgesehen sein.

In den Fig. 4 und 5 ist eine weitere Ausführungsform einer Kupplungsanordnung 12" dargestellt, die hinsichtlich Aufbau und Funktionsweise generell der Kupplungsanordnung der Fig. 2 und 3 entspricht. Gleiche Elemente sind daher durch gleiche Bezugszeichen gekennzeichnet. Im Folgenden werden im Wesentlichen die Unterschiede erläutert.

Bei der Kupplungsanordnung 12" der Fig. 4 und 5 ist eine Verdrehsicherung zwischen dem Axiallager 52" und einem Axialsicherungsring 58" eingerichtet, der, wie bei der Ausführungsform der Fig. 2, beispielsweise zur Axialsicherung eines Stützgliedes 56 der Kupplungsanordnung 12" dient.

Die Verdrehsicherung beinhaltet die Maßnahme, an dem Axialsicherungsring 58", der in eine Außenumfangsnut des Nabengliedes 38 eingesetzt ist, wenigstens eine Aussparung 84 auszubilden. Die Aussparung 84 ist als Radialaussparung gezeigt, kann jedoch auch eine reine Axialaussparung sein.

Ferner beinhaltet die Verdrehsicherung die Maßnahme, an der ersten Scheibe 62", genauer an deren Nasen 76", wenigstens einen Axialvorsprung 86 vorzusehen, der sich in axialer Richtung hin zu dem Axialsicherungsring 58" erstreckt und in die Aussparung 84 greift.

Mit anderen Worten ist es bevorzugt, wenn die Zentriereinrichtung 54" in Umfangsrichtung formschlüssig mit dem Axialsicherungsring 58" in Eingriff steht.

## Patentansprüche

1. Kupplungsanordnung (12) für einen Kraftfahrzeugantriebsstrang (10), mit einem Gehäuse (34), mit wenigstens einer Kupplung (20), mit einem ersten Drehglied (38), das als Wellen- oder Nabenglied ausgebildet ist und das in Bezug auf das Gehäuse (34) drehbar gelagert ist, und mit einem zweiten Drehglied (30), das einen sich radial erstreckenden Radialabschnitt (53) aufweist und das in Bezug auf das Gehäuse (34) drehbar gelagert ist, wobei zwischen dem ersten Drehglied (38) und dem Radialabschnitt (53) des zweiten Drehgliedes (30) ein Axiallager (52) angeordnet ist, wobei das Axiallager (52) in Bezug auf das erste Drehglied (38) zentriert montiert ist, wobei an dem ersten Drehglied (38) benachbart zu dem Axiallager (52) ein Axialsicherungsring (58) montiert ist, **dadurch gekennzeichnet, dass** zwischen dem Axiallager (52) und dem Axialsicherungsring (58) eine Verdrehsicherung (84, 86) eingerichtet ist.

2. Kupplungsanordnung nach Anspruch 1, **dadurch gekennzeichnet, dass** das Axiallager (52) ein Wälzlager mit einer ersten Scheibe (62) und einer zweiten Scheibe (64) ist, zwischen denen eine Mehrzahl von Wälzkörpern (68) angeordnet ist, wobei die erste Scheibe (62) an dem ersten Drehglied (38) axial anliegt und eine sich in axialer Richtung erstreckende Zentriereinrichtung (54) aufweist, die mit einer Ringfläche (78; 80) des ersten Drehgliedes (38) in Eingriff steht.

3. Kupplungsanordnung nach Anspruch 2, **dadurch gekennzeichnet, dass** die Zentriereinrichtung (54) eine Mehrzahl von sich axial erstreckenden Nasen (76; 76') aufweist.

4. Kupplungsanordnung nach Anspruch 3, **dadurch gekennzeichnet, dass** die Nasen (76; 76') einstückig mit der ersten Scheibe (62) ausgebildet sind.

5. Kupplungsanordnung nach einem der Ansprüche 2 - 4, **dadurch gekennzeichnet, dass** die Ringfläche eine Außenumfangsfläche (78) des ersten Drehgliedes (38) aufweist.

6. Kupplungsanordnung nach einem der Ansprüche 2 - 4, **dadurch gekennzeichnet, dass** die Ringfläche eine Innenumfangsfläche (80) des ersten Drehgliedes (38) aufweist.

7. Kupplungsanordnung nach einem der Ansprüche 1 - 6, **dadurch gekennzeichnet, dass** die Kupplung (20) ein Eingangsglied (14) und ein Ausgangsglied (30) aufweist, wobei das zweite Drehglied das Ausgangsglied (30) der Kupplung (20) ist.

8. Kupplungsanordnung nach einem der Ansprüche 1 - 7, **dadurch gekennzeichnet, dass** das erste Drehglied ein Nabenglied (38) ist, das drehbar in Bezug auf einen Gehäusezapfen (36) gelagert ist, wobei das Nabenglied (38) drehfest mit einem Eingangsglied (14) der Kupplung (20) verbunden ist.

9. Kupplungsanordnung nach einem der Ansprüche 1 - 8, **dadurch gekennzeichnet, dass** zwischen dem Nabenglied (38) und dem Gehäusezapfen (36) eine Drehdurchführung (40) zum Zuführen von Fluid (41) zu der Kupplung (20) ausgebildet ist.

10. Verfahren zum Herstellen einer Kupplungsanordnung (12), insbesondere einer Kupplungsanordnung (12) nach einem der Ansprüche 1 - 9, mit den Schritten:
- Bereitstellen eines Gehäuses (34);
- Montieren eines ersten Drehgliedes (38) in Form eines Wellen- oder Nabengliedes an dem Gehäuse (34);
- Montieren eines Axiallagers (52) an dem Wellen- oder Nabenglied (38), so, dass das Axiallager (52) in Bezug auf das Wellen- oder Nabenglied (38) zentriert ist und an einer sich radial erstreckenden Anlagefläche (63) des Wellen- oder Nabengliedes (38) anliegt;
- Montieren eines Axialsicherungsringes (58) an dem Wellen- oder Nabenglied (38), benachbart zu dem Axiallager (52);
- Einrichten einer Verdrehsicherung (84, 86) zwischen dem Axiallager (52) und dem Axialsicherungsring (58); und
- Montieren eines zweiten Drehgliedes (30) an dem Gehäuse (34), wobei das zweite Drehglied (34) einen Radialabschnitt (53) aufweist, der an dem Axiallager (52) anliegt.

## Claims

1. Clutch assembly (12) for a motor vehicle drivetrain (10), having a housing (34), at least one clutch (20), a first rotary element (38), which is embodied as a shaft or hub element and which is supported so that it can rotate in relation to the housing (34), and a second rotary element (30), which comprises a radially extending radial portion (53) and is supported so that it can rotate in relation to the housing (34), an axial bearing (52) being arranged between the first rotary element (38) and the radial portion (53) of the second rotary element (30), wherein the axial bearing (52) is fitted centred in relation to the first rotary element (38), and wherein an axial locking ring (58) is fitted to the first rotary element (38) adjacent to the axial bearing (52), **characterized in that** a torsional locking (84, 86) is established between the axial bearing (52) and the axial locking ring (58).

2. Clutch assembly according to Claim 1, **characterized in that** the axial bearing (52) is a rolling bearing having a first disk (62) and a second disk (64), between which a plurality of rolling elements (68) is arranged, the first disk (62) bearing axially on the first rotary element (38) and having a centring device (54), which extends in an axial direction and which meshes with an annular surface (78; 80) of the first rotary element (38).

3. Clutch assembly according to Claim 2, **characterized in that** the centring device (54) comprises a plurality of axially extending lugs (76; 76').

4. Clutch assembly according to Claim 3, **characterized in that** the lugs (76; 76') are integrally formed with the first disk (62).

5. Clutch assembly according to one of Claims 2-4, **characterized in that** the annular surface comprises an outer circumferential surface (78) of the first rotary element (38).

6. Clutch assembly according to one of Claims 2-4, **characterized in that** the annular surface comprises an inner circumferential surface (80) of the first rotary element (38).

7. Clutch assembly according to one of Claims 1-6, **characterized in that** the clutch (20) comprises an input element (14) and an output element (30), the second rotary element being the output element (30) of the clutch (20).

8. Clutch assembly according to one of Claims 1-7, **characterized in that** the first rotary element is a hub element (38), which is supported so that it can rotate in relation to a housing journal (36), the hub element (38) being rotationally locked to an input element (14) of the clutch (20).

9. Clutch assembly according to one of Claims 1-8, **characterized in that** a rotary passage (40) for delivering fluid (41) to the clutch (20) is formed between the hub element (38) and the housing journal (36).

10. Method for manufacturing a clutch assembly (12), in particular a clutch assembly (12) according to one of Claims 1-9, comprising the following steps:
- providing a housing (34);
- fitting a first rotary element (38) in the form of a shaft or hub element to the housing (34);
- fitting an axial bearing (52) to the shaft or hub element (38), so that the axial bearing (52) is centred in relation to the shaft or hub element (38) and bears on a radially extending bearing surface (63) of the shaft or hub element (38);
- establishing a torsional locking (84, 86) between the axial bearing (52) and the axial locking ring (58);
- fitting an axial locking ring (58) to the shaft or hub element (38) adjacent to the axial bearing (52);
- fitting a second rotary element (30) to the housing (34), the second rotary element (34) comprising a radial portion (53), which bears on the axial bearing (52).

## Revendications

1. Agencement d'embrayage (12) pour une chaîne cinématique d'un véhicule automobile (10), comprenant un boîtier (34) avec au moins un embrayage (20), avec un premier organe rotatif (38) réalisé sous forme d'organe d'arbre ou de moyeu et qui est supporté de manière à pouvoir tourner par rapport au boîtier (34), et avec un deuxième organe rotatif (30) qui présente une portion radiale (53) s'étendant radialement et qui est supporté de manière à pouvoir tourner par rapport au boîtier (34), un palier axial (52) étant disposé entre le premier organe rotatif (38) et la portion radiale (53) du deuxième organe rotatif (30), le palier axial (52) étant monté de manière centrée par rapport au premier organe rotatif (38),
une bague de fixation axiale (58) étant montée sur le premier organe rotatif (38) à côté du palier axial (52), **caractérisé en ce qu'**entre le palier axial (52) et la bague de fixation axiale (58) est prévue une fixation antirotation (84, 86).

2. Agencement d'embrayage selon la revendication 1, **caractérisé en ce que** le palier axial (52) est un palier à roulement avec un premier disque (62) et un deuxième disque (64), entre lesquels est disposée une pluralité de corps de roulement (68), le premier disque (62) s'appliquant axialement contre le premier organe rotatif (38) et présentant un dispositif de centrage (54) s'étendant dans la direction axiale, lequel est en prise avec une surface annulaire (78 ; 80) du premier organe rotatif (38).

3. Agencement d'embrayage selon la revendication 2, **caractérisé en ce que** le dispositif de centrage (54) présente une pluralité d'ergots s'étendant axialement (76 ; 76').

4. Agencement d'embrayage selon la revendication 3, **caractérisé en ce que** les ergots (76 ; 76') sont réalisés d'une seule pièce avec le premier disque (62).

5. Agencement d'embrayage selon l'une quelconque des revendications 2 à 4, **caractérisé en ce que** la surface annulaire présente une surface périphérique extérieure (78) du premier organe rotatif (38).

6. Agencement d'embrayage selon l'une quelconque des revendications 2 à 4, **caractérisé en ce que** la surface annulaire présente une surface périphérique intérieure (80) du premier organe rotatif (38).

7. Agencement d'embrayage selon l'une quelconque des revendications 1 à 6, **caractérisé en ce que** l'embrayage (20) présente un organe d'entrée (14) et un organe de sortie (30), le deuxième organe rotatif étant l'organe de sortie (30) de l'embrayage (20).

8. Agencement d'embrayage selon l'une quelconque des revendications 1 à 7, **caractérisé en ce que** le premier organe rotatif est un organe de moyeu (38) qui est supporté à rotation par rapport à un tourillon de boîtier (36), l'organe de moyeu (38) étant connecté de manière solidaire en rotation à un organe d'entrée (14) de l'embrayage (20).

9. Agencement d'embrayage selon l'une quelconque des revendications 1 à 8, **caractérisé en ce qu'**entre l'organe de moyeu (38) et le tourillon de boîtier (36) est réalisé un passage rotatif (40) pour guider du fluide (41) jusqu'à l'embrayage (20).

10. Procédé de fabrication d'un agencement d'embrayage (12), en particulier d'un agencement d'embrayage (12) selon l'une quelconque des revendications 1 à 9, comprenant les étapes suivantes :
- fourniture d'un boîtier (34) ;
- montage d'un premier organe rotatif (38) sous la forme d'un organe d'arbre ou de moyeu au niveau du boîtier (34) ;
- montage d'un palier axial (52) sur l'organe d'arbre ou de moyeu (38) de telle sorte que le palier axial (52) soit centré par rapport à l'organe d'arbre ou de moyeu (38) et s'applique contre une surface d'appui (63) s'étendant radialement de l'organe d'arbre ou de moyeu (38) ;
- montage d'une bague de fixation axiale (58) sur l'organe d'arbre ou de moyeu (38), à côté du palier axial (52) ;
- installation d'une fixation antirotation (84, 86) entre le palier axial (52) et la bague de fixation axiale (58) ; et
- montage d'un deuxième organe rotatif (30) sur le boîtier (34), le deuxième organe rotatif (34) présentant une portion radiale (53) qui s'applique contre le palier axial (52).
